# EUROPEAN PATENT SPECIFICATION

(11) **EP 2 878 624 B1**
(45) Date of publication and mention of the grant of the patent: **06.04.2016**
(21) Application number: 13194810.1
(22) Date of filing: 28.11.2013
(51) Int. Cl.: C08L 23/10, C08L 53/00, C08L 95/00, E04D 5/10, D06N 5/00

(54) **Waterproofing membranes comprising petcoke and method of production**
Wasserdichte Membranen mit Petrolkoks und Herstellungsverfahren
Membranes d'imperméabilisation comprenant du coke de pétrole et procédé de production

(43) Date of publication of application: 03.06.2015
(73) Proprietor: Icopal Danmark A/S, 2730 Herlev (DK)
(72) Inventor: Minot, Mickaël, 41170 Mondoubleau (FR)
(74) Representative: Zacco Denmark A/S

(56) References cited:
- US-A- 2 552 947
- US-A1- 2003 203 145
- US-A1- 2004 161 570
- Nymphy Dhar: "Modified Bitumen Membrane, ME Thesis, Delhi College of Engineering", , 27 February 2006 (2006-02-27), XP055098230, Retrieved from the Internet: URL:http://61.16.156.122/bitstream/reposit ory/13412/1/NymphyDhar-13-me.pdf [retrieved on 2014-01-23]
- Tim Kersey: "Modified bitumen blen technology", Interface, 1 June 2000 (2000-06-01), XP055098084, Retrieved from the Internet: URL:http://www.rci-online.org/interface/20 00-06-kersey.pdf [retrieved on 2014-01-23]

## Description

### Technical field of the invention

The present invention relates to lightweight waterproofing membranes for protecting buildings or bridges or the like, such as roofing felt.

### Background of the invention

Bitumen waterproofing membranes comprise a reinforcing material coated with a bitumen coating formulation. The waterproofing properties are obtained by the bitumen content. Adding plastomers and elastomers may improve the performance of the bitumen with regard to elasticity, heat resistance and durability.

The waterproofing membranes may also contain mineral filler (typically calcium carbonate or polysilicate), usually having a high density, imparting the necessary viscosity of the bitumen coating formulation for the manufacture of the waterproofing membrane; also contributing to material stiffness and reducing the production costs.

A major drawback by the state of the art products is the density. Indeed the filler typically increases the global formulation density by 30 to 50%.

The waterproofing membranes are traditionally provided in the form of a wrapped, finished product that weighs between 30 and 45 kg per unit. The length of the unwrapped product is 5 to 10 meters, and the standard width is 1 meter. This renders the products troublesome to handle, and the handling may cause excessive loads for one person alone. Often an extra person is needed for carrying the product to the site of use and for applying the products. One could consider reducing the roll length, thereby reducing the total weight. However, the installation, on e.g. a roof surface, will result in more joints and detailing, which requires much more time to finish the job.

A special problem during production is the application of the bitumen coating formulation to the reinforcing material. If the bitumen coating formulation is too viscous, the layer applied will be too thick or the energy consumption of the production process will be unacceptable. If the viscosity is too low, the layer applied will be too thin and difficult to process. The correct thickness of the membrane is very important, since there are regulatory specifications in this regard in many countries.

A specific problem with a low viscosity coating formulation is when the reinforcing material is an open structure (e.g. a grid or woven material). In this case the coating will be discontinuous, and the resulting membrane will not be watertight.

Traditionally, the viscosity has been adjusted by adding mineral filler to the bitumen coating formulation. However, such natural resources are becoming scarce, and the costs are therefore increasing.

EP 2 264 094 discloses waterproofing membranes consisting of a reinforcing material impregnated with a bitumen formulation comprising industrial bitumen, a mineral filler, a thermoplastic polymer or a mixture of thermoplastic polymers, which membranes are characterised in that the mineral filler consists of hollow glass microspheres with a density of between 0.10 and 0.14 g/cm³ and a size of less than 120 µm in order to reduce the weight. One of the disclosed membrane products contains 96.1% w/w of bitumen and plasticizer blend, and 3.9% w/w of hollow glass microspheres. Disclosed properties of this product are cold bending of -25 degrees Celsius and a density of 750 g per square meters per milimeter thickness of the membrane (0.75 g/cm³). However, when trying to reproduce this kind of recipe it was observed that the elastic recovery property was affected too much. Surprisingly, the cold bending properties of the membrane did not comply with the disclosed values. Moreover, it was observed during the installation by torching of the membrane that the hollow glass microspheres were affected by the high temperature (some unusual crackling sound was heard) and were no longer participating to fix the proper viscosity of the torching bituminous blend. As a result, the bituminous blend can become too fluid and flow away instead of allowing good bonding of the membrane to the support. The product collapsed and did not result in the right thickness.

### Summary of the invention

One object of the invention is to provide a waterproofing membrane which may be handled by one person alone, keeping the geometrical characteristics of the product, such as the thickness and the length, without compromising the strength or performance or installation properties of the product.

Another object of the invention is to provide a method for producing a lightweight waterproofing membrane, keeping the geometrical characteristics of the product, such as the thickness and the length, without compromising the strength or performance of the product

One aspect of the invention relates to a waterproofing membrane comprising a reinforcing material coated with a coating formulation comprising:
i) 40-90% w/w bitumen and plasticizer blend;
ii) 5-50% w/w petroleum coke (petcoke); and
iii) 2-25% w/w elastomeric block polymer and/or plastomeric polymer.

A second aspect relates to a coating formulation comprising:
i) 40-90% w/w bitumen and plasticizer blend;
ii) 5-50% w/w petroleum coke (petcoke); and
iii) 2-25% w/w elastomeric block polymer and/or plastomeric polymer.

A third aspect relates to the use of a coating formulation in the production of a waterproofing membrane, the coating formulation comprising:
i) 40-90% w/w bitumen and plasticizer blend;
ii) 5-50% w/w petroleum coke (petcoke); and
iii) 2-25% w/w elastomeric block polymer and/or plastomeric polymer.

### Detailed description of the invention

One object of the invention is to provide a waterproofing membrane which may be handled by one person alone, keeping the geometrical characteristics of the product, such as the thickness and the length, without compromising the strength or performance of the product.

The present invention relates, in a first aspect, to a waterproofing membrane comprising a reinforcing material coated with a coating formulation comprising:
i) 40-90% w/w bitumen and plasticizer blend;
ii) 5-50% w/w petroleum coke (petcoke); and
iii) 2-25% w/w elastomeric block polymer and/or plastomeric polymer.

In the present context, the term "reinforcing material" is used to designate lengths used for carrying and supporting the coating formulation during manufacture and in use. The reinforcing material may be made from natural and/or synthetic materials, typically fibers, such as jute, glass or a polymer fiber, such as polyester fibre.

The bitumen used in accordance with the present invention may be distilled grades having a relatively high penetration, or air blown bitumen having higher softening point temperatures. The quality of bitumen is chosen in accordance with the usual knowledge of the skilled person in accordance with the intended use of the product. Thus, the bitumen grades suitable for use in the present invention have a penetration of 35-50, 50-70, 70-100, 100-150 or 160-220. Air blown bitumen suitable for use in the present invention have grades (softening point/penetration) of 85/25, 95/35, 100/15, 100/40, 88/40, 90/40, 95/40 or 115/15.

The inventors of the present invention have found that petcoke may substitute mineral filler. Furthermore, the geometrical characteristics of the product is maintained without compromising the strength or performance of the product

Petroleum coke (often abbreviated petcoke) is a carbonaceous solid derived from oil refinery coker units or other cracking processes. Hence, it is a waste or recycled material that may substitute the scarce natural resources which are normally used as fillers for waterproofing membranes. Petcoke can either be fuel grade (high in sulphur and metals) or anode grade (low in sulphur and metals). The raw coke directly out of the coker is often referred to as green coke. In this context, "green" means unprocessed. The further processing of green coke by calcining in a rotary kiln removes residual volatile hydrocarbons from the coke. The calcined petroleum coke can be further processed in an anode baking oven in order to produce anode coke of the desired shape and physical properties. The particle size distribution of petcoke as available is normally from 1 to 5000 microns (non ground), and will typically be between 5 and 100 microns when ground (micronized) and calcined.

The inventors have found that the use of the petcoke filler allows for a lowering of the initial formulation density of around 1.3 g/cm³, when standard conventional filler is used, to a desired lower density below 1.1 g/cm³. As seen from Table 3, the weight of a membrane roll, having a roll length of 6.5 meters, is markedly reduced. In order to reduce the amount of joints in an installation, it is possible to produce a membrane roll of similar weight as a standard membrane roll, but with a significant increase (23%) of the length.

The expression "Conventional filler" is used to designate mineral particles which are less than 80 µm in their largest dimension before addition and may e.g. be stone dust such as small particle silicate or lime stone.

Thus, the present invention allows the use of recycled material to obtain a lightweigt membrane with equivalent geometrical characteristics (Tables 1-2). Furthermore, conventional techniques to manufacture the membrane rolls are still possible.

The inventors have found that when using petcoke, it may be desirable to add a plasticizer to the formulation in order to soften and improve the flexibility of the product. This is of importance in the production and during application of the product.

In the present context, the term "plasticizer" designates a bitumen compatible oil. Such oil can be pure aromatic, naphthenic or paraffinic oil or a mixture of two or more of those, flux oil, non-naphthenic vacuum residue oils, e.g. recycled residue oil from lubricant oil, or vegetable oil preferably having a high compatibility with the SBS or APP modified bitumen formulation.

A plasticizer may be present in an amount up to 25% w/w and suitably in an amount up to 20% w/w depending on the bitumen grade, the polymer type, the properties and the amount of petcoke used. For some embodiments of the invention, a plasticizer in an amount of about 2.5% w/w in combination with soft 160/220 bitumen has been found to produce the desired properties. The inventors have found that one can define a correct blend of "bitumen + plasticizer" characterized by the range of penetration giving the best compatibility and the desired properties of the formulation; and giving the desired properties to the waterproofing membrane.

Hence, in one embodiment, the coating formulation comprises plasticizer in an amount of 0-25% w/w, such as within the range of 5-25% w/w, e.g. within the range of 10-25% w/w, such as within the range of 15-25% w/w, e.g. within the range of 20-25% w/w.

In another embodiment, the penetration of the bitumen and plasticizer blend, measured in accordance with EN 1426 (at 25 degrees Celsius), is within the range of 150-300 1/10 mm, such as within the range of 160-295 1/10 mm, e.g. within the range of 165-290 1/10 mm, such as within the range of 170-285 1/10 mm, e.g. within the range of 175-280 1/10 mm, such as within the range of 180-275 1/10 mm, e.g. within the range of 185-270 1/10 mm, such as within the range of 190-265 1/10 mm, e.g. within the range of 195-260 1/10 mm, such as within the range of 160-295 1/10 mm, e.g. within the range of 200-265 1/10 mm, such as within the range of 205-260 1/10 mm, e.g. within the range of 210-250 1/10 mm.

The filler material used in accordance with the present invention may be a petcoke filler alone or a combination of a petcoke filler and a conventional mineral filler material in order to reduce the weight of the finished product without compromising the strength and performance of the product.

The conventional mineral filler may e.g. be Limestone (calcium carbonate) and/or slate dust (polysilicates) which suitably is present in an amount of 1 to 40 % w/w, such as within the range of 5-35% w/w, e.g. within the range of 10-30% w/w, such as within the range of 15-25% w/w, e.g. within the range of 20-25% w/w.

In one embodiment, the coating formulation further comprises filler material, in addition to the petcoke, in an amount of 1-40% w/w, such as within the range of 5-35% w/w, e.g. within the range of 10-30% w/w, such as within the range of 15-25% w/w, e.g. within the range of 20-25% w/w.

The expression "Calcium carbonate" is used to designate limestone having particle size less than 80 µm in their largest dimension before addition.

It is preferred that the coating formulation comprises an elastomeric block polymer and/or plastomeric polymer in order to improve the properties and performance thereof in a manner known per se.

In one embodiment, the coating formulation comprises either an elastomeric block polymer or a plastomeric polymer.

In one embodiment of the invention, the elastomeric block polymer is a thermoplastic polymer, such as Styrene-Butadiene-Styrene (SBS), StyreneIsoprene-Styrene (SIS), Styrene-Ethylene-Butadiene-Styrene (SEBS), Styrene-Butadiene (SB) and mixtures thereof. In preferred embodiments of the invention, the elastomeric block polymer is SBS.

In another embodiment, the elastomeric block polymer is selected from the group consisting of Styrene-Butadiene-Styrene (SBS), Styrene-Isoprene-Styrene (SIS), Styrene-Ethylene-Butadiene-Styrene (SEBS), Styrene-Butadiene (SB) and mixtures thereof.

In yet another embodiment of the invention, the plastomeric polymer is low-density polyethylene, high-density polyethylene, atactic polypropylene, isotactic polypropylene, ethylene/propylene copolymer, ethylene/propylene/butene terpolymer and mixtures thereof. The plastic polymer is preferably atactic polypropylene (APP) in combination with the other described above.
In one embodiment, the coating formulation has a density of 1.050-1.150 g/cm³ for an elastomeric block polymer -modified membrane, and 0.95-1.0 g/cm³ for a plastomeric polymer-modified membrane.

In another embodiment, the water proofing membrane has a density of 1050-1150 g/m² per mm of membrane thickness for a elastomeric block polymer-modified membrane and 950-1000 g/m² for a plastomeric polymer-modified membrane.

It has been found suitable that the polymer is present in an amount of approximately 4 % to 30 % of the bitumen formulation (excluding filler).

Furthermore, it has been found suitable that the petroleum coke filler is present in an amount between 1 and 50 % by weight, which enables reduction of the density to between 1.0 and 1.3.

A suitable amount of petroleum coke is e.g. from 10 to 40% by weight. In one embodiment the added amount of petcoke filler is 36% by weight giving a density of 1.1. Thus, a reduction of the weight of about 15% is obtained. The use of petroleum coke filler as filler in these amounts will result in a wrapped finished product that weighs between 25 and 36 kg per unit for 5 to 10 m length.

A coating formulation according to the invention may be prepared by a manner known per se. The order of blending may be that the petcoke is admixed to a blend of bitumen, plasticizer, and elastomeric block polymer and/or plastomeric polymer. Alternatively, the bitumen and petcoke may be mixed first, where after the plasticizer and elastomeric block polymer and/or plastomeric polymer are admixed. The mixing temperature and time and the degree of shear (high and low) used in the individual steps depend on the grade of bitumen and polymer used, the grade of the petcoke (green or micronized) as well as the amounts of the individual constituents, which are determined as a matter of routine by the person skilled in the art.

In a second aspect the invention relates to a coating formulation comprising:
i) 40-90% w/w bitumen and plasticizer blend;
ii) 5-50% w/w petroleum coke (petcoke); and
iii) 2-25% w/w elastomeric block polymer and/or plastomeric polymer.

In a third aspect the invention relates to the use of a coating formulation in the production of a waterproofing membrane, the coating formulation comprising:
i) 40-90% w/w bitumen and plasticizer blend;
ii) 5-50% w/w petroleum coke (petcoke); and
iii) 2-25% w/w elastomeric block polymer and/or plastomeric polymer.

For the purpose of the present invention definitions of the terms used are stated below.

It should be noted that embodiments and features described in the context of one of the aspects of the present invention also apply to the other aspects of the invention.

The invention will now be described in further details in the following nonlimiting examples.

### Description of the Preferred Embodiments

### MATERIALS AND METHODS

The materials and methods used when performing the below working examples are stated below.

Bitumen 160/220 FR from EXXON.
SBS copolymer : Calprene 411, 70/30 Butadiene/Styrene thermoplastic copolymer having a radial structure from Dynasol Elastomers.
Plasticizer: Standard aromatic oil: Plaxolene 50 from Total.
Petroleum coke: Non ground or ground Petroleum coke from Garcia Muntes.
Conventional filler: Calcium carbonate Etanchcarb P2 from Omya.

Softening point was determined by the Ring and Ball method according to EN 1427. Penetration was determined by the standard method as described in EN 1426. Flow was determined as described in the standard NFP 84-350. Staining was determined as described in EN 13301. Cold Bending was determined as described in standard NFP-84-350. Density was determined using a pycnometer. Elastic Recovery at 200 % was determined as described in Ueatc guide for the assessment of reinforced waterproofing roofing sheets made of bitumen modified with APP or SBS (2001). Ageing was performed using an oven according to EN 1296.

### Examples 1-3.

### Preparation of coating formulations.

Generally, the coating formulations of the present invention can be prepared by the following recipe:
i) 40-90% w/w bitumen and plasticizer blend;
ii) 5-50% w/w petroleum coke (petcoke), and, optionally, mineral filler; and
iii) 2-25% w/w elastomeric block polymer and/or plastomeric polymer.

Coating formulations were prepared by standard blending methods at 200°C. Composition of the coating formulation, expressed as a % by weight:
Bitumen+plasticizer: 57.85% w/w;
Elastomeric block polymer and/or plastomeric polymer: 7.15% w/w; and
Limestone/petcoke filler: 35% w/w.

The testing results at fresh state and after ageing at 80°C are presented in the below Table 1, and show that substitution of limestone filler with petcoke gives rise to products having lower density (1.1 g/cm³) and comparable physical properties of the finished formulation. The formulations comprising only petcoke (Examples 2-3) compared to only mineral filler (Example 1) showed a higher viscosity, which complicates the manufacturing process as higher temperatures are required for processing the formulation. Higher temperatures are undesirable as bitumen and polymer mixture may degrade upon heating.

Furthermore, a reduced property with respect to cold bending was observed.

| Table 1 | **Formulation without plasticizer** | | | | | | | | | | **Formulation with plasticizer** | | | | |
|---|---|---|---|---|---|---|---|---|---|---|---|---|---|---|---|
| Example | **Example 1** | | | | | **Example 2** | | | | | **Example 3** | | | | |
| Fillernature | Limestone | | | | | Petcoke | | | | | Petcoke | | | | |
| Bitumen + Plasticizer | 57.85 | | | | | 57.85 | | | | | 57.85 | | | | |
| Elastomeric block polymer and/or plastomeric polymer | SBS: 7.15 | | | | | SBS:7.15 | | | | | SBS:7.15 | | | | |
| Filler content | 35 | | | | | 35 | | | | | 35 | | | | |
| Total % | 100 % | | | | | 100 % | | | | | 100 % | | | | |
| | | | | | | | | | | | | | | | |
| Ageing at 80°C | **0** | **15d** | **1m** | **2m** | **3m** | **0** | **15d** | **1m** | **2m** | **3m** | **0** | **15d** | **1m** | **2m** | **3m** |
| Softening point (R&B (°C)) | 130 | 127 | 122 | 115 | 106 | 132 | 129 | 125 | 108 | 111 | | 125 | 121 | 120 | 111 |
| Penetration 25°C (1/10 mm) | 41 | 26 | 25 | 22 | 21 | 32 | 20 | 20 | 16 | 17 | 41 | 26 | 23 | 19 | 20 |
| Penetration 50°C (1/10 mm) | 101 | 87 | 84 | 74 | 70 | 95 | 71 | 64 | 53 | 51 | 117 | 81 | 79 | 67 | 62 |
| Flow (mm) | 1 | 0 | 2 | 4 | 8 | 0 | 0 | 0 | 2 | 3 | 1 | 0 | 1 | 1 | 2 |
| EN 13301 (staining) | 12 | 1 | 0 | 4 | 6 | 5 | 0 | 2 | 4 | 4 | 13 | 5 | 1 | 1 | 7 |
| Density (g/cm³) | **1.27** | | | | | **1.1** | | | | | **1.09** | | | | |
| Cold Bending (°C) | -26 | -22 | -20 | -18 | -16 | -22 | -16 | -10 | -8 | -4 | -24 | -16 | -16 | -14 | -6 |
| Viscosity (cPo) at 180°C | 6000 | | | | | 9500 | | | | | 7000 | | | | |
| 190°C | 4000 | | | | | 6500 | | | | | 5000 | | | | |
| 200°C | 3000 | | | | | 4700 | | | | | 3700 | | | | |
| 210°C | 2300 | | | | | 3500 | | | | | 2800 | | | | |

### Examples 4-5.

### Preparation of bitumen formulations.

Composition of the coating formulation, expressed as a % by weight:
Bitumen+plasticizer: 60.68/64.08% w/w;
Elastomeric block polymer and/or plastomeric polymer: 7.48/7.92% w/w; and
Limestone/petcoke filler: 32/28% w/w.

Formulations (Example 4-5) comprising less Petcoke than Examples 2-3 were prepared in the same manner as described under Examples 1-3. The reduction of petcoke in the formulation from 35% w/w to 28-32% w/w resulted in a lower viscosity and improved cold bending after aging at 80 degrees Celsius.

Furthermore, the density is still reduced compared to conventional formulations.

| **Table 2** | **Example 4** | | | | | **Example 5** | | | | |
|---|---|---|---|---|---|---|---|---|---|---|
| Bitumen + Plasticizer | 60.58 | | | | | 64.08 | | | | |
| Elastomeric block polymer and/or plastomeric polymer | SBS:7.48 | | | | | SBS:7.92 | | | | |
| Petcoke filler | 32 | | | | | 28 | | | | |
| Total % | 100 % | | | | | 100 % | | | | |
| | | | | | | | | | | |
| Ageing at 80°C | **0d** | **15d** | **1m** | **2m** | **3m** | **0d** | **15d** | **1m** | **2m** | **3m** |
| R&B (°C) | 129 | 128 | 126 | 119 | 113 | 124 | 123 | 122 | 113 | 107 |
| Pen 25°C (1/10 mm) | 43 | 25 | 23 | 22 | 21 | 46 | 28 | 27 | 25 | 22 |
| Pen 50°C (1/10 mm) | 116 | 85 | 76 | 68 | 68 | 127 | 93 | 86 | 77 | 74 |
| Flow (mm) | 1 | 0 | 0 | 1 | 3 | 1 | 0 | 2 | 2 | 6 |
| EN 13301 (staining) | 13 | 4 | 0 | 17 | 8 | 15 | 5 | 3 | 10 | 8 |
| Density (g/cm³) | **1.08** | | | | | **1.08** | | | | |
| Elastic recovery at 200% | <10% | | | | | <10% | | | | |
| Cold Bending (°C) | -24 | -20 | -16 | -12 | -12 | -24 | -24 | -22 | -16 | -14 |
| Viscosity (cPo) at 180°C | 6250 | | | | | 4800 | | | | |
| 190°C | 4350 | | | | | 3300 | | | | |
| 200°C | 3200 | | | | | 2300 | | | | |
| 210°C | 2450 | | | | | 1700 | | | | |

A membrane was produced according to the state of the art but based on the formula in Example 4.

**Table 3: Industrial trials result based on the 32% Petcoke recipe:**

| | **Standard (limestone)** | **Trial (petcoke)** | |
|---|---|---|---|
| **Thickness (mm)** | 2.9 | 3.0 | 2.9 |
| **Roll length (m)** | 6.5 | 6.5 | 8.0 |
| **Roll weight (kg)** | 24.4 | 22.0 | 25.0 |

As seen from Table 3, the weight of a membrane roll, having a roll length of 6.5 meters, is markedly reduced. To reduce the amount of joints in an installation, it is thereby possible to produce a membrane roll of similar weight as a standard membrane roll, but with a significant increase (23%) of the length.

### Examples 6-8

### Preparation of coating formulations.

Coating formulations comprising APP and various fillers were prepared in the same manner as described in Example 1. The testing results in the below Table 4 show that the density is decreased by about 15 % also in an APP modified coating formulation.

To a standard APP formulation comprising APP, iPP, LDPE and plasticizer (Example 6), 25 % w/w of Limestone filler (Example 7) was introduced, which increased the density from 0.9 to 1.14. In the formulation of Example 8, 10 % w/w of Petcoke filler was introduced to achieve a density of about 1 as appears from the below Table 4.

| **Table 4** | | | |
|---|---|---|---|
| **Raw materials** | **Example 6** | **Example 7** | **Example 8** |
| Bitumen + Plasticizer | 78.5 | 58.9 | 70.65 |
| APPs | 21.5 | 16.1 | 19.35 |
| Standard Limestone filler | | 25,00 | |
| Green Petroleum coke filler | | | 10.00 |
| Total % | 100.00 | 100.00 | 100.00 |
| Softening point (R&B (°C)) | 152 | 152 | 149 |
| Penetration @ 25°C / 60°C (1/10 mm) | 28 | 30 | 31 / 108 |
| Viscosity @ 180°C (cPo) | 6000 | 3500 | 4600 |
| Dispersion | good | good | good |
| Cold Bending at - 15 °C | pass | pass | pass |
| Cold Bending after aging (1 month @ 80°C) | | | |
| Density (g/cm³) | 0.94 | 1.14 | 0.995 |

## Claims

1. A waterproofing membrane comprising a reinforcing material coated with a coating formulation comprising:
i) 40-90% w/w bitumen and plasticizer blend;
ii) 5-50% w/w petroleum coke (petcoke); and
iii) 2-25% w/w elastomeric block polymer and/or plastomeric polymer.

2. A waterproofing membrane according to claim 1, wherein the coating formulation has a density of 1.050-1.150 g/cm³ for an elastomeric block polymer -modified membrane, and 0.95-1.0 g/cm³ for a plastomeric polymer-modified membrane.

3. A waterproofing membrane according to anyone of the claims 1-2, wherein the water proofing membrane has a density of 1050-1150 g/m² per mm of membrane thickness for an elastomeric block polymer-modified membrane and 950-1000 g/m² for a plastomeric polymer-modified membrane.

4. A waterproofing membrane according to anyone of the claims 1-3, the coating formulation further comprises filler material, in addition to the petcoke, in an amount of 1-40% w/w.

5. A waterproofing membrane according to anyone of the claims 1-4, wherein the penetration of the bitumen and plasticizer blend, measured in accordance with EN 1426, is within the range of 200-300 1/10 mm.

6. A waterproofing membrane according to anyone of the claims 1-5, wherein the coating formulation comprises petcoke in an amount of 10-40% w/w.

7. A waterproofing membrane according to anyone of the claims 1-6, wherein the plastomeric polymer is atactic polypropylene (APP).

8. A waterproofing membrane according to anyone of the claims 1-7, wherein the elastomeric block polymer is SBS.

9. Use of a coating formulation in the production of a waterproofing membrane, the coating formulation comprising:
i) 40-90% w/w bitumen and plasticizer blend;
ii) 5-50% w/w petroleum coke (petcoke); and
iii) 2-25% w/w elastomeric block polymer and/or plastomeric polymer..

10. A coating formulation comprising:
i) 40-90% w/w bitumen and plasticizer blend;
ii) 5-50% w/w petroleum coke (petcoke); and
iii) 2-25% w/w elastomeric block polymer and/or plastomeric polymer.

## Patentansprüche

1. Wasserdichte Membran, umfassend ein Verstärkungsmaterial, das mit einer Beschichtungsformulierung beschichtet ist, umfassend:
i) 40-90% Gew./Gew. Bitumen- und Weichmachermischung;
ii) 5-50% Gew./Gew. Petrolkoks; und
iii) 2-25% Gew./Gew. elastomeres Blockpolymer und/oder plastomeres Polymer.

2. Wasserdichte Membran nach Anspruch 1, wobei die Beschichtungsformulierung eine Dichte von 1,050-1,150 g/cm³ für eine mit elastomerem Blockpolymer modifizierte Membran und 0,95-1,0 g/cm³ für eine mit plastomerem Polymer modifizierte Membran.

3. Wasserdichte Membran nach einem der Ansprüche 1-2, wobei die wasserdichte Membran eine Dichte von 1050-1150 g/m² pro mm Membrandicke für eine mit elastomerem Blockpolymer modifizierte Membran und 950-1000 g/m² für eine mit plastomerem Polymer modifizierte Membran.

4. Wasserdichte Membran nach einem der Ansprüche 1-3, wobei die Beschichtungsformulierung weiter Füllmaterial, zusätzlich zum Petrolkoks, in einer Menge von 1-40% Gew./Gew. umfasst.

5. Wasserdichte Membran nach einem der Ansprüche 1-4, wobei die Eindringung der Bitumen- und Weichmachermischung, gemessen gemäß EN 1426, im Bereich von 200-300 1/10 mm ist.

6. Wasserdichte Membran nach einem der Ansprüche 1-5, wobei die Beschichtungsformulierung Petrolkoks in einer Menge von 10-40% Gew./Gew. umfasst.

7. Wasserdichte Membran nach einem der Ansprüche 1-6, wobei das plastomere Polymer ataktisches Polypropylen (APP) ist.

8. Wasserdichte Membran nach einem der Ansprüche 1-7, wobei das elastomere Blockpolymer SBS ist.

9. Anwendung einer Beschichtungsformulierung beim Herstellen einer wasserdichten Membran, wobei die Beschichtungsformulierung Folgendes umfasst:
i) 40-90% Gew./Gew. Bitumen- und Weichmachermischung;
ii) 5-50% Gew./Gew. Petrolkoks; und
iii) 2-25% Gew./Gew. elastomeres Blockpolymer und/oder plastomeres Polymer.

10. Beschichtungsformulierung, umfassend:
i) 40-90% Gew./Gew. Bitumen- und Weichmachermischung;
ii) 5-50% Gew./Gew. Petrolkoks; und
iii) 2-25% Gew./Gew. elastomeres Blockpolymer und/oder plastomeres Polymer.

## Revendications

1. Membrane d'étanchéité comprenant une matière de renforcement revêtue d'une formulation de revêtement comprenant:
i) 40-90% en poids/poids de mélange de bitume et de plastifiants;
ii) 5-50% en poids/poids de coke de pétrole (petcoke); et
iii) 2-25% en poids/poids de polymère séquencé élastomère et/ou plastomère polymère.

2. Membrane d'étanchéité selon la revendication 1, dans laquelle la formulation de revêtement a une densité de 1,050-1,150 g/cm³ pour une membrane modifiée par un polymère séquencé élastomère, et 0,95-1,0 g/cm³ pour une membrane modifiée par un polymère plastomère.

3. Membrane d'étanchéité selon l'une quelconque des revendications 1-2, dans laquelle la membrane d'étanchéité a une densité de 1050-1150 g/cm² par mm d'épaisseur de la membrane pour une membrane modifiée par un polymère séquencé élastomère, et 950-1000 g/cm² pour une membrane modifiée par un polymère plastomère.

4. Membrane d'étanchéité selon l'une quelconque des revendications 1-3, dans laquelle la formulation de revêtement comprend en outre un matériau de charge, en plus du coke de pétrole, dans une quantité de 1 à 40% en poids/poids.

5. Membrane d'étanchéité selon l'une quelconque des revendications 1-4, dans laquelle la pénétration du mélange de bitume et de plastifiant, mesurée selon la norme EN 1426, est comprise entre 200-300 1/10 mm.

6. Membrane d'étanchéité selon l'une quelconque des revendications 1-5, dans laquelle la formulation de revêtement comprend du coke de pétrole dans une quantité de 10 à 40% en poids/poids.

7. Membrane d'étanchéité selon l'une quelconque des revendications 1-6, dans laquelle le polymère plastomère est le polypropylène atactique (APP).

8. Membrane d'étanchéité selon l'une quelconque des revendications 1-7, dans laquelle le polymère séquencé élastomère est SBS.

9. Utilisation d'une formulation de revêtement dans la production d'une membrane d'étanchéité, la formulation de revêtement comprenant:
i) 40-90% en poids/poids de mélange de bitume et de plastifiants;
ii) 5-50% en poids/poids de coke de pétrole (petcoke); et
iii) 2-25% en poids/poids de polymère séquencé élastomère et/ou plastomère polymère.

10. Formulation de revêtement comprenant:
i) 40-90% en poids/poids de mélange de bitume et de plastifiants;
ii) 5-50% en poids/poids de coke de pétrole (petcoke); et
iii) 2-25% en poids/poids de polymère séquencé élastomère et/ou plastomère polymère.
